(19) Europäisches Patentamt
European Patent Office
Office européen des brevets

(11) **EP 3 511 563 A1**

(12) **EUROPEAN PATENT APPLICATION**

(43) Date of publication:
**17.07.2019 Bulletin 2019/29**

(51) Int Cl.:
**F03D 7/02** *(2006.01)* **F03D 7/04** *(2006.01)*
**H02J 3/38** *(2006.01)*

(21) Application number: **18151626.1**

(22) Date of filing: **15.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Siemens Gamesa Renewable Energy A/S**
**7330 Brande (DK)**

(72) Inventors:
• **Kleif, Bjarke**
  **7100 Vejle (DK)**
• **Poulsen, Jan Oestergaard**
  **8600 Silkeborg (DK)**
• **Stoettrup, Michael**
  **7400 Herning (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **UPPER LIMIT FOR A WIND PARK CONTROLLER**

(57) It is described a method of determining an upper limit value (33) for an active power controller (17) of a wind park (1) comprising plural wind turbines (3) connected at a point of common coupling (5), the method comprising: estimating a cumulative loss (18) of active power occurring between output terminals of the plural wind turbines (3) and the point of common coupling (5); determining the upper limit value (33) based on the estimated loss (18) of active power.

FIG 1

## Description

Field of invention

The present invention relates to a method and arrangement for determining an upper limit value for an active power controller of a wind park, relates to a method of controlling an active power controller of a wind park, relates to a method of controlling a wind park, and further relates to a control system for controlling an active power of a wind park and even further relates to a wind park.

Art Background

A wind park may comprise plural wind turbines which may be connected to a point of common coupling. The wind park may conventionally be controlled to provide a reference active power at the point of common coupling. For this purpose, the conventional wind park may comprise a wind park controller which may control the individual wind turbines such as to output a cumulative active power which corresponds to the reference of the active power. Conventionally, the wind park controller may be supplied with an upper limit value of its output value corresponding to a cumulative maximally allowed active power.

The conventional wind park controller may comprise a PI-controller which may have an upper limit that its output is not allowed to exceed. Conventionally, a fixed upper limit value has been used for the wind park controller. The upper limit needs to be large enough to compensate for the electrical losses from the turbine terminals to the point of common coupling (PCC). It has been observed, that an overshoot, i.e. too much output of active power, may occur in a situation, where the wind speed increases from a relatively low wind speed to a relatively high wind speed. However, the larger the upper limit is, the higher the overshoot of the active power at the PCC may get. By the overshoot, instabilities of the utility grid, in particular oscillations, may be induced which may lead to risk of damage of other components or other problems.

Thus, there may be a need for a method and arrangement of determining an upper limit value of an active power controller of a wind park, there may be a need for a control method for controlling an active power controller, there may be a need for a method of controlling a wind park and there may further be a need for a control system for controlling an active power of a wind park and there may be a need for a wind park, wherein the above-mentioned problems are at least reduced.

Summary of the Invention

This need may be met by the subject matter according to the independent claims. Advantageous embodiments of the present invention are described by the dependent claims.

According to an embodiment of the present invention it is provided a method of determining an upper limit value for an active power controller of a wind park comprising plural wind turbines connected at a point of common coupling, the method comprising: estimating a cumulative loss of active power occurring between output terminals of the plural wind turbines and the point of common coupling; determining the upper limit value based on the estimated loss of active power.

The method may be performed by an arrangement for determining an upper limit value according to an embodiment of the present invention, which may in particular be comprised in a wind park control system. The active power controller may be configured for controlling an active power at the point of common coupling to comply with a wind park active power reference. The active power controller may for example comprise a PID, a Pi-controller or the like. The upper limit value for the active power controller restricts the output signal of the active power controller to be not exceeding the upper limit value. In particular, the upper limit value may thereby restrict the active power which is ultimately generated by the plural wind turbines which are (in particular indirectly via optional plural individual wind turbine controllers) controlled by the active power controller.

Each of the plural wind turbines may comprise a wind turbine tower, a nacelle mounted on top of the wind turbine tower, wherein the nacelle comprises an electric generator, for example a synchronous permanent magnet generator which is mechanically coupled to a rotation shaft at which plural rotor blades are connected. Each of the wind turbines may further comprise a converter, in particular AC-DC-AC-converter which is electrically coupled to output terminals of the generator, in order to convert a variable frequency power stream to a fixed frequency power stream. The wind turbines may further each comprise an optional wind turbine transformer.

Due to a transmission line between the output terminal of each wind turbine and the point of common coupling, during operation, a portion of the active power output generated by each of the wind turbines may be dissipated and may thereby be lost at the point of common coupling. The cumulative loss of active power may be estimated using mathematical/physical simulations and/or measurements. The cumulative loss of the active power may for example be calculated from individual losses of active power for each of the plural wind turbines. The cumulative loss of active power may in particular be estimated based on the active power at the point of common coupling, as measured or may be estimated based on a reference active power at the point of common connection. In particular, the cumulated loss may be estimated to have different values for different active power actually output at the point of common coupling or being different for different active power references.

Thus, the upper limit value is not a constant upper limit value (and also not linearly dependent on the active power) for different active power at the point of common coupling, but may change with different active power at the point of common coupling in a manner different from a linear relationship. Thereby, potential overshoot in situations, where the wind speed suddenly increases may be reduced.

According to an embodiment of the present invention, according to the dependence (of the loss on the common coupling point active power) the loss of active power increases with increasing active power at the point of common coupling, in particular the loss of active power increases stronger than linear with increasing active power at the point of common coupling. For higher active power at the point of common coupling, the upper limit value may be determined to be higher (different from a simple proportionality) than for lower active power at the point of common coupling. The loss of active power may in particular be a convex function (having derivative larger than zero that increases (not being constant as a linear function) with increasing active power) of the active power at the point of common coupling.

According to an embodiment of the present invention, estimating the loss of active power includes: establishing a relationship between the loss of active power and the active power at the point of common connection. The (e.g. mathematical) relationship may have been established previously and may subsequently be used for determining the cumulative loss of active power for a known active power at the point of common coupling or for a particular reference active power at the point of common coupling. Thereby, the method may be simplified and accelerated.

According to an embodiment of the present invention, the relationship is expressable as a mathematical equation describing the power loss as a polynomial of at least first order power or at least second power of the active power at the point of common connection. The mathematical equation or in general the relationship may be implemented in computer software. The polynomial may provide a simple method for describing the relationship.

According to an embodiment of the present invention, the polynomial is a second order polynomial. In particular, a coefficient in front of a square of the active power may be not equal to zero, this coefficient may in particular be larger than zero.

According to an embodiment of the present invention, the polynomial comprises coefficients which are adjusted to comply with experimental data including measured active power at the point of common connection and measured loss of active power. For example, for different active power output at the point of common coupling, the cumulative loss of active power may have been determined and included into the experimental data. Thereby, for example, the data may have been obtained under different environmental and/or operational conditions to obtain an average over different operational and environmental conditions.

According to an embodiment of the present invention, determining the upper limit value includes calculating the upper limit value as a sum of the estimated loss of active power and a wind park active power reference at the point of common coupling. Thus, the active power controller may be provided with the upper limit value such that the controller output signal is at most the estimated loss of active power above the wind park active power reference. Thereby, the control output signal is large enough to compensate for the electrical losses from the turbine terminals to the point of common coupling but furthermore reduces a risk of overshoot of the active power compared to the prior art.

According to an embodiment of the present invention it is provided a method of controlling an active power controller of a wind park comprising plural wind turbines connected at a point of common coupling, the method comprising: performing a method of determining an upper limit value for the active power controller according to one of the preceding embodiments; supplying an error signal of active power, determined as difference between a wind park active power reference (e.g. Pref) and a measured active power at the point of common coupling, to the active power controller; determining, by the active power controller, an controller output signal based on the error signal and restricted to be not greater than the upper limit value.

The method may for example be carried out by a wind park controller or a control system according to embodiments of the present invention. The wind park active power reference may be determined in a number of manners, for example may be obtained from a utility grid operator. The controller output signal may in particular indicate a sum of active power reference values provided to all of the plural wind turbines. The active power controller may for example comprise or be a PI-controller. The PI-controller may comprise a proportion branch and an integration branch which are both configured by parameters. The output of the proportion branch and the output of the integrative branch may be summed (e.g. in a weighted manner) to arrive at the controller output signal. Furthermore, the controller output signal may be restricted by the upper limit value and by a lower limit value which may be set to 0 MW. Thus, the controller output signal is restricted to be between the lower limit value and the upper limit value.

According to an embodiment of the present invention it is provided a method of controlling a wind park comprising plural wind turbines connected at a point of common coupling, the method comprising: performing a method of controlling an active power controller of the wind park according to one of the preceding embodiments; determining plural active power wind turbine reference signal based on the controller output signal; and distributing the plural active power wind turbine reference signals to the plural wind turbines.

For example, the plural active power wind turbine reference signals may all be equal or may be different from each other, but their sum may substantially be equal to the controller output signal (or the cumulative active power reference corresponding to the controller output signal). Further, a particular distribution algorithm may be performed to cause particular wind turbines to provide more active power than other wind turbines of the wind park. The active power wind turbine reference signals may be distributed using any known communication methodology.

According to an embodiment of the present invention, the method for controlling the wind park further comprises operating the wind park at low wind condition at a wind park active power reference (e.g. Pref) such that the controller output signal substantially equals the upper limit value; operating the wind park at high wind condition at the same wind park active power reference (Pref) restricting overshoot to be lower than the estimated power loss estimated for the wind park active power reference.

When the wind park is operated at a relatively low wind condition, the active power controller may provide the controller output signal substantially equal to the upper limit value, since the actual wind condition may not be sufficient for the plural wind turbines to provide the required active power. Thus may not be possible to provide the wind park active power reference at the point of common coupling. When, in this situation, the wind speed suddenly changes to higher values, the wind turbines may be enabled to suddenly provide increased active power which may be considerably larger than the required wind park active power reference. In this situation, the output of the active power of the plural wind turbines is advantageously restricted such that the maximal cumulative overshoot is limited by the anti-wind up limit defined by the polynomial minus the losses. . Thereby, the overshoot may effectively be restricted, in order to avoid subsequent problems.

It should be understood that features, individually or in any combination disclosed, described or explained with respect to a method of determining an upper limit value for an active power controller of a wind park may also be applied, individually or in any combination, to an arrangement for determining an upper limit value according to an embodiment of the present invention and vice versa and further to a control system or a wind park according to embodiments of the present invention.

According to an embodiment of the present invention it is provided an arrangement for determining an upper limit value for an active power controller of a wind park comprising plural wind turbines connected at a point of common coupling, the method comprising a processor adapted to estimate a cumulative loss of active power occurring between output terminals of the plural wind turbines and the point of common coupling; and to determine the upper limit value based on the estimated loss of active power. The arrangement may be comprised in a wind park controller.

Furthermore, it is provided a control system for controlling an active power of a wind park comprising plural wind turbines connected at a point of common coupling, the system comprising the arrangement according to the preceding embodiment and the active power controller, connected to the arrangement.

Finally, it is provided a wind park comprising plural wind turbines connected at a point of common coupling; and a control system according to the preceding claim.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind park according to an embodiment of the present invention including a wind park controller according to an embodiment of the present invention;

Fig. 2 illustrates a relationship between active power output and loss of active power as considered in embodiments of the present invention.

Detailed Description

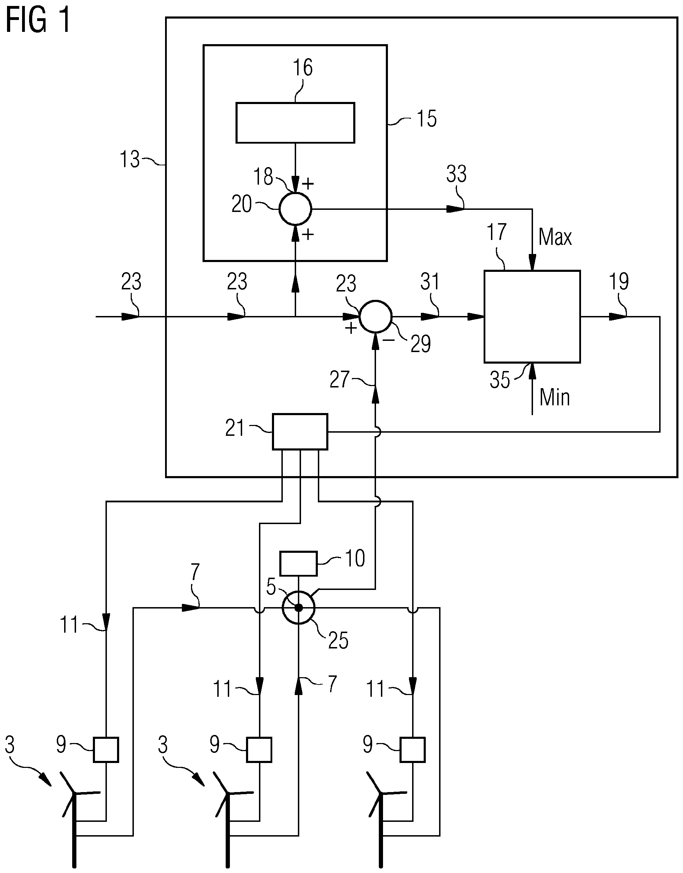

The wind park 1 according to an embodiment of the present invention illustrated in Fig. 1 comprises plural wind turbines 3 which are connected to a common point of common coupling 5 to which the wind turbines 3 provide their individual active power output streams 7. The wind turbines 3 may also additionally provide reactive power to the point of common coupling 5. The point of common coupling 5 is connected (e.g. via a wind park transformer) to a utility grid 10. Each of the wind turbines 3 comprises a respective wind turbine controller 9 which controls the operation of the wind turbine 3.

The wind turbine controllers 9 receive each an active power wind turbine reference signal 11 which is provided by a control system 13 according to an embodiment of the present invention.

The control system (also referred to as wind park controller) 13 comprises an arrangement 15 for determining an upper limit value 33 for an active power controller 17 according to an embodiment of the present invention and further comprises the active power controller 17. The active power controller 17 outputs a controller output signal 19 and provides it to a distribution module 21 which derives from the controller output signal 19 the active power wind turbine reference signals 11 and provides them to the wind turbine controllers 9.

The control system 13 receives from an external entity a wind park active power reference 23 (Pref) which defines a desired total active power output at the point of common coupling 5. The actual active power output at the point of common coupling 5 is measured using a measurement sensor 25 and is provided as a measurement signal 27 to a difference element 29 with a negative sign. To the difference element 29 also the wind park active power reference 23 is provided such that the difference element 29 outputs a difference 31 between the wind park active power reference 23 (Pref) and the measured active power (represented by the measurement signal 27) at the point of common coupling 5. The error signal 31 is supplied to the active power controller 17. The active power controller 17 determines based on the error signal 31 the controller output signal 19 which is restricted to be within the upper limit value 33 and a lower limit value 35. The lower limit value 35 may for example be 0 MW.

The upper limit value is determined according to a method according to an embodiment of the present invention for which the arrangement 15 is used. The arrangement 15 comprises a processor 16 which is adapted to estimate a cumulative loss 18 of active power occurring between output terminals of the plural wind turbines 3 and the point of common coupling 5 and to determine the upper limit value 33 based on the estimated loss of active power.

The processor 16 may comprise for example an electronic storage in which a relationship between the cumulated loss of active power and the active power at the point of common coupling or the reference active power at the point of common coupling is stored.

According to an embodiment of the present invention the loss estimate may be done offline, i.e. the loss estimate may be done once offline, and the parameters may just be entered as parameters into the controller. According to another embodiment of the present invention the loss estimate may be done online, thereby continuously providing updates of the parameters to the controller.

The processor 16 may for example utilize the relationship between the active power at the point of common coupling and the loss of active power which may be described by a mathematical equation or may be obtained from a look-up table for example.

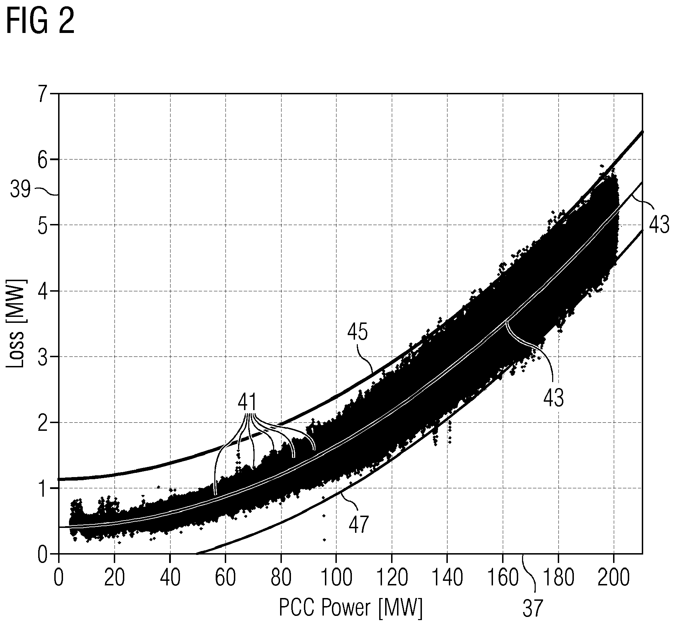

Therefore, the arrangement 15 or in particular the processor 16 may estimate the losses of active power as a function of the active power at the point of common coupling, as is illustrated in Fig. 2. Therein, the abscissa of the graph of Fig. 2 labelled with reference sign 37 indicates the desired active power at the point of common coupling, while the ordinate 39 indicates the loss of active power due to the transition of electric active power from the respective wind turbines 3 to the point of common coupling 5. The scattered data points each represent measurements of the estimated loss of active power in dependence of the active power at the point of common coupling. The measurement data points are labelled by reference sign 41. For establishing a relationship between the active power at the point of common coupling and the loss of active power, an n-th order polynomial may be estimated using known fitting algorithms. In the illustrated example, a second order polynomial has been fitted to the data points 41, wherein the best fit polynomial is labelled with reference sign 43. Based on the curve 43 for every active power at the point of common coupling, the corresponding loss of active power may be obtained.

Thereby, the upper limit value 33 may be calculated using the curve 43 for every wind park active power reference 23 or 37. According to embodiments of the present invention, the upper limit 33 is calculated as a sum of the estimated loss of active power 18 and the wind park AC power reference 23 (Pref). The sum is calculated using the summation element 20 which is comprised within the arrangement 15. Thereby, the upper limit value 33 is calculated as the sum of the estimated loss 18 and the wind park active power reference 23.

According to an embodiment of the present invention, the estimated cumulative loss 18 may be calculated using the curve 43. According to other embodiments of the present invention, the estimated cumulative loss 18 may be calculated using one of the curves 45 or 47 which are shifted by constant amounts relative to the best fit curve 43. The offset of the curves 45, 47 can be selected or chosen such as to reduce the risk of overshooting (for example subtracting a value from the best fit curve 43) arriving at curve 47 or such as to reduce the risk of not reaching the set point in the point of common coupling (for example by adding a positive value to the best fit curve 43) in order to arrive at the curve 45.

According to an embodiment of the present invention, the estimated loss of active power may be calculated according to following equation:

$$P_{wind-up,offset}\left(P_{ref}\right) = A \cdot P_{ref}^2 + B \cdot P_{ref} + C$$

Herein, A, B and C are coefficients for example to be determined by fitting a curve to experimental data points, such as data points 41 illustrated in Fig. 2. P$_{wind-up, offset}$ may correspond to the estimated cumulative loss 18 illustrated in Fig. 1.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1.  Method of determining an upper limit value (33) for an active power controller (17) of a wind park (1) comprising plural wind turbines (3) connected at a point of common coupling (5), the method comprising:

    estimating a cumulative loss (18) of active power occurring between output terminals of the plural wind turbines (3) and the point of common coupling (5);
    determining the upper limit value (33) based on the estimated loss (18) of active power.

2.  Method according to the preceding claim, wherein estimating the loss (18) of active power includes estimating the loss of active power in dependence of a reference active power (Pref) or a measured active power (27) at the point of common coupling (5).

3.  Method according to one of the preceding claims,
    wherein according to the dependence the loss (18) of active power increases with increasing active power (23, 27) at the point of common coupling (5), in particular the loss of active power increases stronger or faster than linear with increasing active power at the point of common coupling.

4.  Method according to one of the preceding claims, wherein estimating the loss of active power includes:

    establishing a relationship between the loss (18) of active power and the active power (23, 27) at the point of common connection.

5.  Method according to one of the preceding claims,
    wherein the relationship is expressable as a mathematical equation describing the power loss (18) as a polynomial of at least first power or at least second power of the active power at the point of common connection.

6.  Method according to one of the preceding claims, wherein the polynomial is a second order polynomial.

7.  Method according to one of the preceding claims,
    wherein the polynomial (43, 45, 47) comprises coefficients which are adjusted to comply with experimental data (41) including measured active power at the point of common connection and measured loss of active power.

8.  Method according to one of the preceding claims,
    wherein determining the upper limit value (33) includes calculating the upper limit value as a sum of the estimated loss (18) of active power and a wind park active power reference (Pref, 21) at the point of common coupling (5).

9.  Method of controlling an active power controller (17) of a wind park (1) comprising plural wind turbines connected at a point of common coupling (5), the method comprising:

    performing a method of determining an upper limit value (33) for the active power controller according to one of the preceding claims;
    supplying an error signal (31) of active power, determined as difference between a wind park active power reference (Pref) and a measured active power (27) at the point of common coupling, to the active power controller;
    determining, by the active power controller, an controller output signal (19) based on the error signal and restricted to be not greater than the upper limit value (33).

10. Method of controlling a wind park comprising plural wind turbines connected at a point of common coupling, the method comprising:

performing a method of controlling an active power controller of the wind park according to one of the preceding claims;
determining plural active power wind turbine reference signals (11) based on the controller output signal (19); and
distributing the plural active power wind turbine reference signals to the plural wind turbines (3).

11. Method according to the preceding claim, further comprising:

operating the wind park at low wind condition at a wind park active power reference (Pref) such that the controller output signal substantially equals the upper limit value;
operating the wind park at high wind condition at the same wind park active power reference (Pref) restricting overshoot to be lower than the estimated power loss estimated for the wind park active power reference.

12. Arrangement (15) for determining an upper limit value (33) for an active power controller (17) of a wind park (1) comprising plural wind turbines (3) connected at a point of common coupling (5), the method comprising:

a processor (16) adapted:

to estimate a cumulative loss (18) of active power occurring between output terminals of the plural wind turbines and the point of common coupling; and
to determine the upper limit value (33) based on the estimated loss of active power.

13. Control system (13) for controlling an active power of a wind park (1) comprising plural wind turbines (3) connected at a point of common coupling (5), the system comprising:

the arrangement (15) according to the preceding claim; and
the active power controller (17), connected to the arrangement.

14. Wind park (1) comprising:

plural wind turbines (3) connected at a point of common coupling (5); and
a control system (13) according to the preceding claim.

FIG 1

FIG 2

Europäisches
Patentamt

European
Patent Office

Office européen
des brevets

# EUROPEAN SEARCH REPORT

Application Number

EP 18 15 1626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/114527 A1 (VESTAS WIND SYS AS [DK]) 6 July 2017 (2017-07-06) * figure 8 * * page 20, line 21 - page 23, line 9 * * figure 3 * * page 7, line 28 - page 12, line 17 * | 1-15 | INV. F03D7/02 F03D7/04 H02J3/38 |
| X | EP 2 161 444 A2 (GEN ELECTRIC [US]) 10 March 2010 (2010-03-10) * figures 2,6 * * paragraph [0032] * | 1-6,8-15 | |
| A | US 2012/061960 A1 (YASUGI AKIRA [JP] ET AL) 15 March 2012 (2012-03-15) * paragraph [0040] - paragraph [0052] * | 1-15 | |
| A | EP 2 921 699 A1 (GEN ELECTRIC [US]) 23 September 2015 (2015-09-23) * paragraph [0063] - paragraph [0082] * | 1-15 | |
| A | WO 2014/194914 A1 (VESTAS WIND SYS AS [DK]) 11 December 2014 (2014-12-11) * claim 10 * * page 15, line 20 - line 22 * | 1-15 | TECHNICAL FIELDS SEARCHED (IPC) F03D H02J |

The present search report has been drawn up for all claims

| Place of search | Date of completion of the search | Examiner |
|---|---|---|
| Munich | 28 June 2018 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 1626

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2018

| Patent document cited in search report | Publication date | Patent family member(s) | Publication date |
|---|---|---|---|
| WO 2017114527 A1 | 06-07-2017 | NONE | |
| EP 2161444 A2 | 10-03-2010 | CN 101640419 A | 03-02-2010 |
| | | DK 2161444 T3 | 28-05-2018 |
| | | EP 2161444 A2 | 10-03-2010 |
| | | US 2010025994 A1 | 04-02-2010 |
| US 2012061960 A1 | 15-03-2012 | AU 2011202422 A1 | 20-09-2012 |
| | | BR PI1100017 A2 | 03-05-2016 |
| | | CA 2741569 A1 | 04-09-2012 |
| | | CN 102792581 A | 21-11-2012 |
| | | JP 5276718 B2 | 28-08-2013 |
| | | JP WO2012120595 A1 | 07-07-2014 |
| | | KR 20120135002 A | 12-12-2012 |
| | | US 2012061960 A1 | 15-03-2012 |
| | | WO 2012120595 A1 | 13-09-2012 |
| EP 2921699 A1 | 23-09-2015 | BR 102015005897 A2 | 24-05-2016 |
| | | CA 2883814 A1 | 18-09-2015 |
| | | EP 2921699 A1 | 23-09-2015 |
| | | US 2015267683 A1 | 24-09-2015 |
| WO 2014194914 A1 | 11-12-2014 | CN 105308312 A | 03-02-2016 |
| | | EP 3004634 A1 | 13-04-2016 |
| | | US 2016108890 A1 | 21-04-2016 |
| | | WO 2014194914 A1 | 11-12-2014 |

EPO FORM P0459

For more details about this annex : see Official Journal of the European Patent Office, No. 12/82